# EUROPÄISCHE PATENTSCHRIFT

(11) **EP 1 614 596 B1**
(45) Veröffentlichungstag und Bekanntmachung des Hinweises auf die Patenterteilung: **12.03.2008**
(21) Anmeldenummer: 05013629.0
(22) Anmeldetag: 24.06.2005
(51) Int. Cl.: B60S 1/48, B60R 16/00

(54) **Steuerungseinrichtung für eine Scheibenwisch- und-waschanlage an einem Kraftfahrzeug**
Control device for a windscreen wipe and wash installation on a vehicle
Dispositif de contrôle d'une installation de lavage et d'essuyage de vitres sur un véhicule

(30) Priorität: 10.07.2004 DE 102004033505
(43) Veröffentlichungstag der Anmeldung: 11.01.2006
(73) Patentinhaber: GM Global Technology Operations, Inc., Detroit, MI 48265-3000 (US)
(72) Erfinder: Jung, Frank, 63225 Langen (DE)
(74) Vertreter: Daniel, Ulrich W.P.

(56) Entgegenhaltungen:
- DE-A1- 4 027 326
- DE-A1- 4 241 056
- US-A- 4 317 073
- US-A- 5 105 134

## Beschreibung

Die Erfindung bezieht sich auf eine Steuerungseinrichtung für eine Scheibenwisch- und -waschanlage an einem Kraftfahrzeug mit einem Steuergerät, an dem unterschiedliche Betriebsarten der Anlage einstellbar sind, und einem damit verbundenen Bedienelement, das in einer ersten Stellung in Kombination eine Spritzwasserzufuhr und ein mehrzyklisches Nachwischen der Scheibe auslöst. Eine derartige Steuerungseinrichtung ist aus der DE 42 410 56 A1 bekannt. Die Erfindung bezieht sich auch auf ein Verfahren zum Steuern einer Scheibenwisch- und -waschanlage an einem Kraftfahrzeug.

Derzeitige Lösungen zum Realisieren einer Waschfunktion an einer Scheibe eines Kraftfahrzeuges sehen nach dem Betätigen der Waschanlage ein Nachwischen durch den Scheibenwischer einer Wischanlage mit in der Regel mindestens drei Wischzyklen vor. Dieses Nachwischen bzw. die Anzahl der Wischzyklen kann dabei als störend empfunden werden, da oft die Scheibe nach ein bis zwei Wischzyklen sauber und trocken ist. Durch weitere Wischzyklen wird diese allerdings wieder mit einem Schmierfilm versehen. Die solchermaßen behinderte Durchsicht kann die Fahrsicherheit beeinträchtigen.

Die DE 2 123 376 A1 offenbart eine Steuereinrichtung für eine Windschutzscheibenwisch- und -waschanlage an einem Kraftfahrzeug, die einen verhältnismäßig geringen Platzbedarf erfordert. Als Zeitgeber zum Abschalten des Scheibenwischers ist dabei ein Spulen-Magnetkernrelais vorgesehen, das in einer Spulen-Kondensatorschaltung betrieben wird und bei dem die Entladezeit des Kondensators eine Verzögerungszeit bestimmt.

Eine gattungsgemäße Steuerungsvorrichtung und ein gattungsgemäßes Verfahren sind aus DE-A-4241056 bekannt.

Die DE 40 16 772 C2 zeigt einen elektrischen Schalter zum Betreiben einer Scheibenwisch- und -waschanlage eines Kraftfahrzeugs, bei dem durch Verschwenken eines Schalthebels zum Einschalten der Scheibenwaschanlage auch die Scheibenwischanlage eingeschaltet werden kann.

Es ist Aufgabe der Erfindung, eine Steuerungseinrichtung für eine Scheibenwisch- und -waschanlage an einem Kraftfahrzeug der eingangs genannten Art bereitzustellen, die ein vorzeitiges Abbrechen des Nachwischens durch den Fahrer ermöglicht. Weiterhin ist es Aufgabe der Erfindung ein entsprechendes Verfahren anzugeben.

Die Aufgabe wird durch eine Steuerungseinrichtung gelöst, bei der eine zweite Stellung des Bedienelements vorgesehen ist, in der ein eingeleitetes Nachwischen der Scheibe vorzeitig zu beenden ist.

Ein wesentlicher Vorteil der erfindungsgemäßen Steuereinrichtung besteht darin, dass der Nachwischvorgang nach eigenem Empfinden des Nutzers abgebrochen werden kann, wenn die Durchsicht an der Scheibe für ihn optimal ist. Ein Verschmieren der Scheibe, insbesondere bei leichtem Nieselregen in dichtem Verkehr, wird sicher ausgeschlossen, wodurch die Fahrsicherheit erhöht wird.

In Ausgestaltung der Erfindung umfasst das Bedienelement einen Lenkstockhebel, an dem als zweite Stellung zum vorzeitigen Beenden des Nachwischens eine bereits vorhandene, üblicherweise vorgesehene Betriebsstellung genutzt wird. Die Funktionen eines Lenkstockhebels sind einem Nutzer üblicherweise intuitiv bekannt. Das Betätigen der Wasch- und Wischfunktion erfolgt im Allgemeinen durch Ziehen des rechten Lenkstockhebels in eine fahrerseitige erste Stellung des Lenkstockhebels. Hierdurch wird die kombinierte Wasch- und Wischfunktion an der Windschutzscheibe ausgelöst. Eine zweite Stellung zum Beenden des zyklischen Nachwischens kann z. B. durch Drücken des Lenkstockhebels in eine fahrerabgewandte Stellung erreicht werden, die üblicherweise zum Betätigen des Heckscheibenwischers vorgesehen ist. Das Nachwischen wird dann vorzeitig beendet, ohne dass der Heckscheibenwischer betätigt wird. Denkbar sind natürlich auch andere geeignete Stellungen eines Lenkstockhebels zum Abbrechen der Nachwischfunktion, die auch an einem linken Lenkstockhebel realisiert sein können.

Bevorzugt wird als zweite Stellung zum vorzeitigen Beenden des Nachwischens eine Betriebsstellung genutzt, in der üblicherweise das einmalige Wischen der Scheibe ausgelöst wird. Diese Betriebsstellung ist auch als sogenannte Tipp-Wisch-Funktion bekannt. Hierbei wird durch kurzes Antippen des rechten Lenkstockhebels nach oben ein Wischzyklus ausgelöst. Durch die damit gegebene funktionale Nähe (Einschalten/Ausschalten eines Zyklus) ist diese zum Abbrechen des Nachwischens für einen Nutzer besonders leicht erfassbar und intuitiv zu nutzen.

Bei modernen Kraftfahrzeugen werden anstelle rastender Lenkstockschalter häufig Tastschalter eingesetzt. Das Schalten der einzelnen Wischerstufen erfolgt hierbei im Allgemeinen durch eine Tippbetätigung des Lenkstockhebels, also des Bedienelementes, des Lenkstockschalters nach oben und das Zurückschalten in eine niedrigere Wischerstufe bzw. das Ausschalten des Wischers durch die Tippbetätigung des Lenkstockhebels des Lenkstockschalters nach unten. Die Tastschalter werden durch ein Steuergerät ausgewertet, welches die verschiedenen Wisch-/Waschfunktionen realisiert. Zweckmäßigerweise wird als zweite Stellung zum vorzeitigen Beenden des Nachwischens eine Betriebsstellung, insbesondere des Bedienelementes eines Tastschalters, genutzt wird, durch die ein Ausschalten des Wischens der Scheibe ausgelöst.

Vorteilhafterweise ist eine Schaltlogik des vorzeitigen Beendens des Nachwischens in dem Steuergerät verwirklicht. Dadurch können die bereits in einem Kraftfahrzeug vorhandenen Bedienelemente unverändert bleiben, wodurch der nutzerseitig gerade im Bereich der Armaturen begrenzte Raum nicht eingeschränkt wird. Dabei ist die Schaltlogik als auf dem Steuergerät ablauffähige Software ausgebildet, die keine weiteren Hardwarekosten voraussetzt und zudem leicht implementier- und wartbar ist.

Zweckmäßigerweise sind das Steuergerät und das Bedienelement über einen Fahrzeug-Datenbus miteinander verbunden. Dadurch ist eine sehr einfache Implementierung neuer Funktionen möglich, da alle relevanten Informationen auf dem Bus zur Verfügung gestellt werden können. Insbesondere sind dadurch spezifische Verkabelungen überflüssig, die jedoch selbstverständlich ebenfalls zu realisieren sind.

Die Aufgabe wird auch durch ein Verfahren zum Steuern einer Scheibenwisch- und -waschanlage an einem Kraftfahrzeug gelöst, bei dem das Nachwischen der Scheibe von dem Nutzer durch Beaufschlagung eines Bedienelementes vorzeitig beendet wird.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

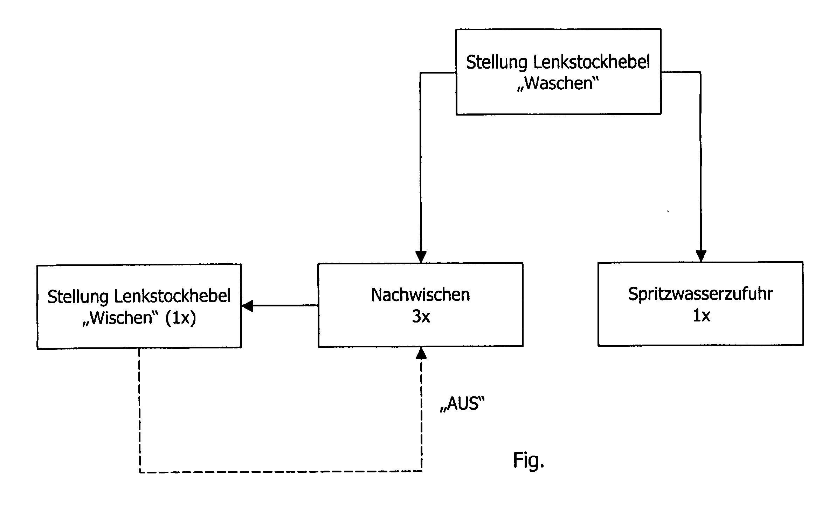

Die Erfindung wird im Folgenden anhand eines Ausführungsbeispiels unter Bezugnahme auf die zugehörige Zeichnung näher erläutert. Die einzige Fig. der Zeichnung zeigt ein Ablaufdiagramm des erfindungsgemäßen Verfahrens unter Nutzung der erfindungsgemäßen Steuereinrichtung.

Nach dem Ziehen des Lenkstockhebels eines Kraftfahrzeuges in die Stellung "Waschen" wird ein Waschvorgang mit Spritzwasserzufuhr (1-mal) und ein zyklischer Nachwischvorgang (3-mal) an der Scheibe ausgelöst. Ist die Scheibe bereits nach zwei Wischzyklen sauber und trocken, kann der Fahrer des Kraftfahrzeuges durch Antippen des Lenkstockhebels nach oben den Nachwischvorgang vorzeitig abbrechen. Der üblicherweise in dieser Stellung des Lenkstockhebels ausgelöste einmalige Wischzyklus der Scheibenwischer wird in diesem Fall nicht aktiviert. Der Wischvorgang ist damit beendet "AUS".

Es wird also eine sehr einfache Möglichkeit geschaffen, den oft störenden Nachwischvorgang der Waschfunktion abzubrechen. Dadurch wird eine bessere Sicht für den Fahrer erreicht und ein Wischen auf bereits trockener Scheibe vermieden, was zudem einen vorzeitigen Verschleiß der Wischerblätter ausschließt. Ferner wird die Fahrsicherheit erhöht.

## Patentansprüche

1. Steuerungseinrichtung für eine Scheibenwisch- und -waschanlage an einem Kraftfahrzeug mit einem Steuergerät, an dem unterschiedliche Betriebsarten der Anlage einstellbar sind, und einem damit verbundenen Bedienelement, das in einer ersten Stellung in Kombination eine Spritzwasserzufuhr und ein mehrzyklisches Nachwischen der Scheibe auslöst, **dadurch gekennzeichnet, dass** eine zweite Stellung des Bedienelements vorgesehen ist, in der ein derart eingeleitetes Nachwischen der Scheibe vorzeitig beendet wird.

2. Steuerungseinrichtung nach Anspruch 1, **dadurch gekennzeichnet, dass** das Bedienelement einen Lenkstockhebel umfasst, an dem als zweite Stellung zum vorzeitigen Beenden des Nachwischens eine bereits vorhandene, üblicherweise vorgesehene Betriebsstellung genutzt wird.

3. Steuerungseinrichtung nach Anspruch 2, **dadurch gekennzeichnet, dass** als zweite Stellung zum vorzeitigen Beenden des Nachwischens eine Betriebsstellung genutzt wird, in der üblicherweise das einmalige Wischen der Scheibe ausgelöst wird.

4. Steuerungseinrichtung nach Anspruch 2, **dadurch gekennzeichnet, dass** als zweite Stellung zum vorzeitigen Beenden des Nachwischens eine Betriebsstellung, insbesondere des Bedienelementes eines Tastschalters, genutzt wird, durch die ein Ausschalten des Wischens der Scheibe ausgelöst wird.

5. Steuerungseinrichtung nach einem der Ansprüche 1 bis 4, **dadurch gekennzeichnet, dass** eine Schaltlogik des vorzeitigen Beendens des Nachwischens in dem Steuergerät verwirklicht ist.

6. Steuerungseinrichtung nach Anspruch 5, **dadurch gekennzeichnet, dass** die Schaltlogik als auf dem Steuergerät ablauffähige Software ausgebildet ist.

7. Steuerungseinrichtung nach einem der Ansprüche 1 bis 5, **dadurch gekennzeichnet, dass** das Steuergerät und das Bedienelement über einen Fahrzeug-Datenbus oder eine spezifische Verkabelung miteinander verbunden sind.

8. Verfahren zum Steuern einer Scheibenwisch- und -waschanlage an einem Kraftfahrzeug unter Verwendung einer Steuereinrichtung nach einem der vorstehenden Ansprüche, die in einer Betriebsart in Kombination eine Spritzwasserzufuhr und ein mehrzyklisches Nachwischen der Scheibe vorsieht, **dadurch gekennzeichnet, dass** das Nachwischen der Scheibe von einem Nutzer durch Beaufschlagung eines Bedienelementes vorzeitig beendet wird.

## Claims

1. Control device for a windscreen wipe-and-wash installation of a motor vehicle comprising a control device, in which different operating modes of the installation are settable, and an operating element connected thereto, which in a first position initiates in combination a spray water supply and a multi-cycle follow-up windscreen wiping operation, **characterized in that** a second position of the operating element is provided, in which a follow-up windscreen wiping operation initiated in this manner is terminated early,

2. Control device according to claim 1, **characterized in that** the operating element comprises a steering column lever, at which as a second position for early termination of the follow-up wiping operation a pre-existing, conventionally provided operating position is used.

3. Control device according to claim 2, **characterized in that** as a second position for early termination of the follow-up wiping operation an operating position is used, in which conventionally the single wipe of the windscreen is initiated.

4. Control device according to claim 2, **characterized in that** as a second position for early termination of the follow-up wiping operation there is used an operating position, in particular of the operating element of a momentary-contact switch, by means of which a switching-off of the windscreen wiping operation is initiated.

5. Control device according to one of claims 1 to 4, **characterized in that** a switching logic of the early termination of the follow-up wiping operation is realized in the control unit.

6. Control device according to claim 5, **characterized in that** the switching logic takes the form of software that can be run on the control unit.

7. Control device according to one of claims 1 to 5, **characterized in that** the control unit and the operating element are connected to one another by a vehicle data bus or a specific cable system.

8. Method of controlling a windscreen wipe-and-wash installation of a motor vehicle using a control device according to one of the preceding claims, which in one operating mode provides in combination a spray water supply and a multi-cycle follow-up windscreen wiping operation, **characterized in that** the follow-up windscreen wiping operation is terminated early by a user by acting upon an operating element.

## Revendications

1. Dispositif de commande pour une installation de lavage et d'essuyage de vitres, sur un véhicule automobile, avec un appareil de commande, sur lequel différents types de fonctionnements de l'installation peuvent être réglés et un élément de manoeuvre lui étant relié, qui, en une première position, en combinaison, déclenche une amenée d'eau projetée et un essuyage ultérieur en plusieurs cycles de la vitre, **caractérisé en ce qu'**une deuxième position de l'élément de manoeuvre est prévue, dans laquelle un essuyage ultérieur de la vitre, lancé de cette manière, est achevé de façon anticipée.

2. Dispositif de commande selon la revendication 1, **caractérisé en ce que** l'élément de manoeuvre comprend un levier monté sur la colonne de direction, sur lequel, en tant que deuxième position, pour obtenir l'achèvement anticipé de l'essuyage ultérieur, on utilise une position de fonctionnement déjà existante, usuellement prévue.

3. Dispositif de commande selon la revendication 2, **caractérisé en ce que** l'on utilise comme deuxième position, pour obtenir l'achèvement anticipé de l'essuyage ultérieur, une position de fonctionnement dans laquelle usuellement est déclenché l'essuyage en une fois de la vitre.

4. Dispositif de commande selon la revendication 2, **caractérisé en ce qu'**on utilise comme deuxième position, pour obtenir l'achèvement anticipé de l'essuyage ultérieur, une position de fonctionnement, en particulier de l'élément de manoeuvre, d'un interrupteur à touches, au moyen duquel une mise hors service de l'essuyage de la vitre est déclenchée.

5. Dispositif de commande selon l'une des revendications 1 à 4, **caractérisé en ce qu'**une logique de commutation de l'achèvement anticipé de l'essuyage ultérieur est réalisée dans l'appareil de commande.

6. Dispositif de commande selon la revendication 5, **caractérisé en ce que** la logique de commutation est réalisée sous la forme de logiciel, apte à se dérouler sur l'appareil de commande.

7. Dispositif de commande selon l'une des revendications 1 à 5, **caractérisé en ce que** l'appareil de commande et l'élément de manoeuvre sont reliés ensemble par un bus de données de véhicule ou un câblage spécifique.

8. Procédé de commande d'une installation d'essuyage et de lavage de vitres, sur un véhicule automobile, avec utilisation d'un dispositif de commande selon l'une des revendications précédentes, prévoyant en un type de fonctionnement, en combinaison, une amenée d'eau projetée et un essuyage ultérieur de la vitre en plusieurs cycles, **caractérisé en ce que** l'essuyage ultérieur de la vitre est achevé de façon anticipée par un utilisateur, en sollicitant un élément de manoeuvre.
